# EUROPÄISCHE PATENTSCHRIFT

(11) **EP 1 433 902 B1**
(45) Veröffentlichungstag und Bekanntmachung des Hinweises auf die Patenterteilung: **08.08.2007**
(21) Anmeldenummer: 03029762.6
(22) Anmeldetag: 23.12.2003
(51) Int. Cl.: E01C 19/20, B65G 33/24

(54) **Streustoffaustragvorrichtung**
Dispenser for spreadable granular material
Distributeur pour matière granulaire répandable

(30) Priorität: 24.12.2002 DE 10261058
(43) Veröffentlichungstag der Anmeldung: 30.06.2004
(73) Patentinhaber: Küpper-Weisser GmbH, D-78199 Bräunlingen (DE)
(72) Erfinder: Seidl, Richard-Peter, 78166 Donaueschingen (DE); Dankwardt, Reinhold Otto, 78166 Donaueschingen (DE); Schmidt, Karl-Rudolf, 78199 Bräunlingen (DE)
(74) Vertreter: Klunker . Schmitt-Nilson . Hirsch

(56) Entgegenhaltungen:
- DE-A1- 1 658 523
- DE-A1- 3 909 868
- DE-B- 1 069 657
- DE-U- 20 119 003
- FR-A- 731 773
- GB-A- 656 019
- GB-A- 1 211 239

## Beschreibung

Die Erfindung betrifft eine Streustoffaustragvorrichtung gemäß dem Oberbegriff des Anspruchs 1, insbesondere für Winterdienststreufahrzeuge, zum Zuführen von Streustoff aus einem Streustoffreservoir zu einem rotierenden Streuteller, von dem der Streustoff in etwa in horizontaler Richtung unter Ausnutzung der Fliehkraftwirkung abgeschleudert wird.

Für die Erzeugung eines homogenen Streuteppichs ist eine gleichmäßige kontinuierliche Streustoffzuführung unter wechselnden Randbedingungen wesentlich. Insbesondere beim Ausstreuen von geringen Streumengen kann eine pulsierende Zuführung des Streustoffs zum Streuteller auftreten. Dieses Problem tritt verstärkt beim Streuen von restfeuchtem Salz mit einem Feuchtigkeitsanteil zwischen 0,5 und 3 Gew.% auf, da restfeuchtes Salz zum Verklumpen neigt und daher bisweilen stoßweise aus dem Streustoffreservoir ausgetragen wird.

Der Streustoff wird aus einem nach unten zusammenlaufenden Behälter - dem Streustoffreservoir - durch ein Förderelement, üblicherweise entweder mittels einem Förderband oder mittels einer Förderschnecke, heraus transportiert. Im Falle einer Förderschnecke erstreckt sich diese entlang einer U-förmigen Rinne am Grund des Behälters und weiter durch ein Förderrohr aus dem Behälter hinaus bis zu einer Öffnung über einem zum Streuteller führenden Fallrohr oder über eine Rutsche. Die Förderschnecke besteht typischerweise aus einem gewindeartigen Metallband, welches auf speichenartigen Stützen radial um eine Antriebswelle herum gewunden ist. Mit jeder Umdrehung der Förderschnecke tritt am freien Ende der Schnecke eine bestimmte Menge Streustoff aus, die mit steigendem Feuchtigkeitsgehalt des Streustoffs zunehmend stoßartig von dem nachgeförderten Streustoff abbricht.

Um einen gleichmäßigen Streustoffaustrag zu erzielen, wird in der DE 39 09 868 C2 vorgeschlagen, zwischen dem Förderschneckenende und der oberen Fallrohröffnung einen rohrförmigen Stauraum vorzusehen, dessen Länge mindestens ein Drittel des Förderschneckendurchmessers beträgt. Am Ende des Stauraums befindet sich unmittelbar vor der Fallrohröffnung eine gewichtsbelastete oder federbelastete, pendelnd aufgehängte Stauklappe, gegen die der Streustoff gefördert wird, bis sich ein ausreichend hoher Förderdruck aufbaut, der zum Öffnen der Stauklappe führt. Weiterhin ist die Förderschnecke in ihrem Endabschnitt zweigängig mit vollflächigen Schneckengängen ausgebildet, um die Pulsationsfrequenz zu verdoppeln bei entsprechend halbierter Pulsationsmenge. Durch den laufenden Förderdurchsatz entsteht dann eine ziemlich konstante Öffnungsweite zwischen der Stauklappe und dem Förderrohrende und damit ein in etwa konstanter Streustoffstrom in das Fallrohr und auf den darunterliegenden Streuteller.

Es ist auch bekannt, die federbelastete Stauklappe ins Fallrohr in einer etwa horizontalen Lage zu integrieren, so dass sie beim Verschwenken des Fallrohrs einschließlich Streuteller mitschwenkt, wenn der Streuteller zur Verlagerung des Streubilds verdreht wird.

Jedoch hat sich gezeigt, dass die Pulsationsproblematik, insbesondere beim Austragen von restfeuchtem Streusalz, nicht zufriedenstellend gelöst ist. Vielmehr bewirkt die federbelastete Stauklappe bisweilen sogar eine Verstärkung der Pulsation.

Aufgabe der vorliegenden Erfindung ist es, eine Streustoffaustragvorrichtung vorzuschlagen, mit der auch bei unterschiedlichsten Streumengen und Feuchtegraden ein gleichmäßiges Streubild erzielbar ist, insbesondere eine Streustoffaustragvorrichtung mit verminderter Pulsation.

Diese Aufgabe wird durch eine Streustoffaustragvorrichtung mit den Merkmalen des unabhängigen Patentanspruchs 1 gelöst. Die Merkmale des Oberbegriffs sind aus der DE-B-1069657 bekannt. In davon abhängigen Ansprüchen sind vorteilhafte Weiterbildungen und Ausgestaltungen der Erfindung angegeben.

Es wurde nämlich festgestellt, dass der durch das in der Regel geneigte Fallrohr zum Streuteller geleitete Streustoff an unterschiedlichen Stellen auf den Streuteller auftrifft, wenn der Streuteller einschließlich dem Fallrohr, an dem er montiert ist, zur Verlagerung des Streubilds verschwenkt wird. Dementsprechend verändert sich dabei in unerwünschter Weise auch das Streubild.

Dieses Phänomen ist darauf zurückzuführen, dass der Streustoff das Fallrohr bzw. die Rutsche nicht linear herab rutscht, sondern vielmehr eine sinusförmige Rutschkurve beschreibt. Die genaue Form der Rutschkurve hängt beispielsweise davon ab, an welcher Stelle der durch die Fallrohröffnung hindurchströmende Streustoff auf die Innenwand des geneigten Fallrohrs auftrifft, und auch davon, welchen Drall die Streustoffströmung zum Auftreffzeitpunkt besitzt. Insbesondere die Streustoffströmung von trockenem Streusalz besitzt nach seinem Austritt aus der Förderschnecke noch längere Zeit einen wesentlich stärkeren Drall als restfeuchtes Streusalz. Dieser Drall wird durch die in dieselbe Richtung drehenden Rührstäbe noch verstärkt, wohingegen die Rührstäbe auf restfeuchtes Streusalz eine geringere Drallwirkung ausüben.

Durch eine einmalige oder bevorzugt mehrmalige Umlenkung innerhalb des Fallrohres bzw. der Rutsche wird der Streustoffströmung dieser Drall weitgehend entzogen. Dazu sieht die Erfindung vor, dem im allgemeinen geradlinigen Fallrohr bzw. der geradlinigen Rutsche einen bogenförmigen Abschnitt, also z. B. einen Fallrohrbogen oder einen Rutschenbogen, vorzuschalten. Der Streustoff fällt dann zunächst in den bogenförmigen Abschnitt, wird in diesem umgeleitet, z. B. entgegen der eigentlichen Förderrichtung zurückgeführt, und tritt erst dann in das geneigte Fallrohr ein bzw. auf die geneigte Rutsche auf, welche eine dem bogenförmigen Abschnitt entgegengesetzte Neigungsrichtung von etwa 70° zur Horizontalen besitzt. Der Fallrohrbogen kann auch mehrere Krümmungen oder Umlenkungen besitzen oder es können mehrere Fallrohrbögen hintereinander angeordnet sein, um die Streustoffströmung mehrfach umzuleiten.

Wesentlich für eine besondere Weiterbildung der Erfindung ist, dass auf ein Gegendruck erzeugendes Stauelement zwischen dem Fördermittel, insbesondere der Förderschnecke, und dem unteren Fallrohrende oberhalb des Streutellers vollkommen verzichtet wird. Stattdessen ist in dem Bereich zwischen dem Förderschneckenende und der oberen Fallrohröffnung ein Mittel zur Entklumpung des Streustoffs, insbesondere eine Rühreinrichtung, vorgesehen. Mit dieser Rühreinrichtung kann insbesondere zum Verklumpen neigendes, restfeuchtes Streusalz aufgebrochen werden, bevor es in das Fallrohr fällt. Das Streusalz fließt somit ungehindert, und insbesondere gegendrucklos, bis zum Streuteller.

Als Entklumpungsmittel kann ein Mittel verwendet werden, welches den Streustoff mechanisch angetrieben beaufschlagt, insbesondere schlägt, walzt, bevorzugt aber rührt.

Die Rühreinrichtung besteht vorzugsweise aus einer oder mehreren Reihen von über den Umfang einer Verlängerung der Schneckenwelle verteilten Rührelementen, bevorzugt Stäben, die streng radial oder vorzugsweise mit unterschiedlich axialen Neigungen von der Schneckenwellenverlängerung abstehen. Durch die unterschiedliche axiale Neigung wird die Aufbrechwirkung der Rühreinrichtung verstärkt. Eine Schlageinrichtung kann ähnlich den Stäben, aber dreschflegelartig ausgebildet sein. Eine Walzeinrichtung kann mit einer oder mehreren Walzen oder Rollen versehen sein.

Eine einzige Stabreihe kann ausreichend sein. Sie ist vorzugsweise in einem Abstand von mindestens einem Drittel des Schneckendurchmessers vom Schneckenende entfernt gelegen, um eine Ruhezone am Schneckenaustritt zu schaffen, und liegt vorzugsweise unmittelbar vor der Öffnung zum Fallrohr. Es könnten vorteilhaft auch zwei Stabreihen vorgesehen sein, eine erste am Ende der Ruhezone und eine zweite unmittelbar vor oder an der Abrißkante der Fallrohröffnung. Insbesondere für den Einsatz von zur Verklumpung neigendem restfeuchtem Streusalz kann noch eine weitere Stabreihe über der Fallrohröffnung liegen.

Zu viele Stäbe und Stabreihen können beim Streuen von restfeuchtem Streusalz zum Verblocken führen. Die Stabreihen sind daher vorzugsweise auf ein bis drei Reihen begrenzt mit jeweils drei bis acht Stäben, vorzugsweise jeweils fünf Stäben, pro Reihe. Die Stäbe einer jeden Reihe sind über den Umfang gleichmäßig verteilt. Vorzugsweise stehen die Stäbe benachbarter Stabreihen auf Lücke zueinander.

Entsprechende Ausgestaltungen sind für Schlag- oder Walzeinrichtungen möglich. Es können auch Kombinationen solcher Einrichtungen als Entklumpungsmittel vorgesehen sein.

Am Auslaufende des Förderrohrs auf der der Förderschnecke gegenüberliegenden Seite der Fallrohröffnung ist eine Auskleidung aus Polyurethan vorgesehen, insbesondere aus einem als "Vulkollan" bekannten PU-Material. Vulkollan besitzt eine sehr glatte Oberfläche und verhindert daher besonders effektiv ein etwaiges Anbacken von Streustoff, so dass über die Fallrohröffnung hinaus geförderter Streustoff von der Vulkollanauskleidung ins Fallrohr hineinrutscht.

Um darüber hinaus den Drall weiter zu vermindern, kann die Förderschnecke wie in früheren Streugeräten wieder bis zum Auslaufende vorzugsweise eingängig ausgebildet werden. Aufgrund der dementsprechend geringeren Steigung steigt der translatorische Förderanteil relativ zum rotatorischen Förderanteil an, so dass der Drall der Streustoffströmung und demzufolge die Amplitude ihrer sinusförmigen Rutschkurve entsprechend abnehmen. Zwar verdoppelt sich dadurch die Pulsationsmenge je Umdrehung im Vergleich zu einer zweigängig endenden Förderschnecke, aber durch die Ruhezone, die anschließenden Rührstäbe und durch den bogenförmigen Fallrohr- bzw. Rutschenabschnitt wird diese Pulsation geglättet.

Schließlich ist es vorteilhaft, wenn das Förderrohr im Anschluß an die Förderschnecke bis zur Fallrohröffnung als konkave Rinne ausgeführt ist. Innerhalb der Ruhezone und der daran anschließenden Rührzone zentriert sich der Streustoff selbstätig auf dem Grund der Rinne noch bevor er die Abrißkante der Fallrohröffnung erreicht und fällt dann als fokussierter Strom in das Fallrohr.

Nachfolgend wird die Erfindung beispielhaft anhand der begleitenden Zeichnung beschrieben.

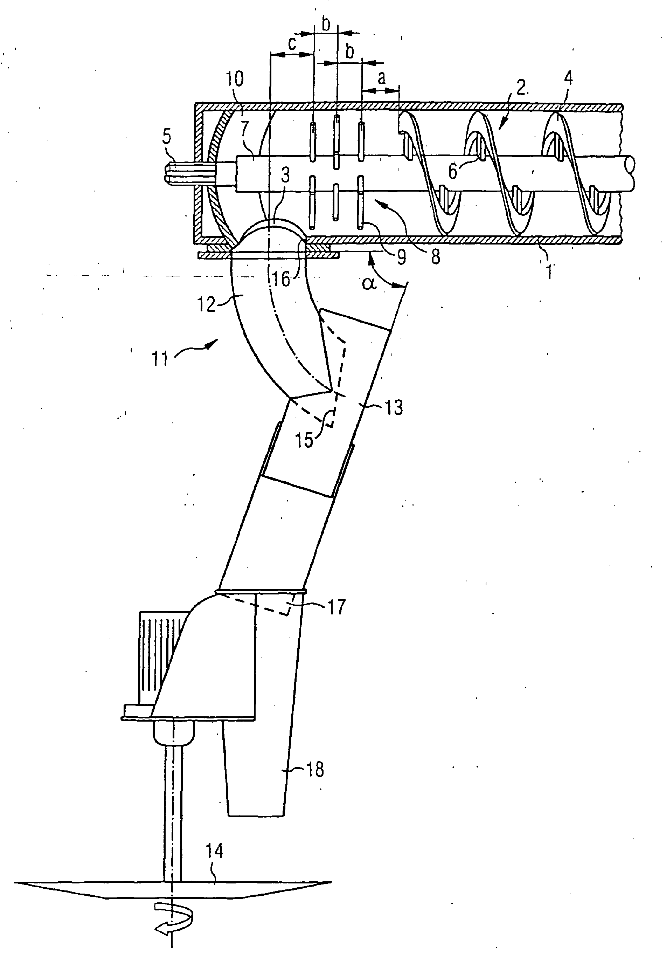

Die einzige Figur zeigt teilweise im Schnitt eine Streustoffaustragvorrichtung für ein Winterdienstfahrzeug in neutraler, d. h. unverschwenkter, Position mit einem Förderrohr 1, in dem eine Förderschnecke 2 rotiert, um Streusalz aus einem nicht dargestellten Streusalzbehälter durch das Förderrohr 1 zu einer Fallrohröffnung 3 am Ende des Förderrohrs 1 zu fördern. Das Förderrohr 1 ist im Bereich von der Förderschnecke 2 bis über die Fallrohröffnung 3 hinaus als konkave Rinne ausgebildet. Die Förderschnecke besteht aus einem Metallband 4, welches um eine Antriebswelle 5 gewindeartig gewickelt und über radiale Stege 6 an dieser fixiert ist. An einer Verlängerung 7 der Antriebswelle 5 befinden sich in einem Abstand a zum Ende der Förderschnecke 2 zwei voneinander um das Maß b beabstandete radiale Stiftreihen. Jede dieser beiden Stiftreihen 8 umfaßt fünf gleichmäßig um den Umfang der Antriebswelle 5 verteilte Stifte 9, die sich von der Antriebswelle 5 streng radial nach außen erstrecken.

Der Abstand a zwischen dem Ende der Förderschnecke 2 und der zur Förderschnecke nächst gelegenen Stiftreihe 8 definiert eine Ruhezone, in welcher das von der Förderschnecke 2 geförderte Streusalz auf den Grund des zylinderförmigen Förderrohrs 1 sinkt. Die mit der Förderschnecke 2 auf der Antriebswelle 5 rotierenden Stifte 9 rühren das Streusalz, welches durch nachgefördertes Streusalz weiter in Richtung zur Fallrohröffnung 3 vorgeschoben wird, durch und brechen dabei Verklumpungen auf. Diese Aufbrechwirkung wird durch eine in Förderrichtung liegende, zweite Stiftreihe 8 verstärkt. Die zweite Stiftreihe 8 liegt kurz vor der Abrißkante 16 der Fallrohröffnung 3, kann aber auch unmittelbar an der Abrißkante 16 liegen.

In der Ruhezone geht ein Teil des Dralls der Streustoffströmung verloren, jedoch wird durch die rotierenden Stiftreihen zusätzlich ein geringfügiger Drall erzeugt.

Die durch den Abstand a zwischen der in Förderrichtung ersten Stiftreihe 8 und dem Ende der Förderschnecke 2 definierte Ruhezone erstreckt sich über eine Förderlänge, die in etwa einem Drittel des Förderschneckendurchmessers oder mehr entspricht. Vorzugsweise liegt der Durchmesser der Förderschnecke zwischen 150 mm und 200 mm. Bei einem Förderschneckendurchmesser von 180 mm beträgt der Abstand a beispielsweise 70 mm. Der Abstand b zur nächsten Stiftreihe 8 beträgt beispielsweise 50 mm. Der Abstand c zwischen der zweiten Stiftreihe und dem Mittelpunkt der Fallrohröffnung 3 beträgt beispielsweise 65 mm. Weitere Stiftreihen 8 können vorgesehen sein, wobei die Stiftreihen vorzugsweise in etwa den gleichen Abstand b zueinander besitzen. Insbesondere kann also eine dritte Stiftreihe 8 vorgesehen sein, die dann oberhalb der Fallrohröffnung 3 liegt. Eine solche dritte Stiftreihe ist insbesondere dann sinnvoll, wenn zum Verklumpen neigendes Streusalz mit einer Restfeuchte von 0,5% bis 3 % ausgetragen wird.

Am Ende des Förderrohrs 1 ist eine Auskleidung 10 aus Vulkollan vorgesehen, die in die Fallrohröffnung 3 lappenartig hineinragt. Etwaiges über die Fallrohröffnung 3 hinaus gefördertes Streusalz rutscht dann von der extrem glatten Oberfläche der Vulkollanauskleidung 10 in die Fallrohröffnung 3.

An die Fallrohröffnung 3 schließt sich ein Fallrohr 11 an, welches aus einem ersten, bogenförmigen Teil 12, einem zweiten, geraden und geneigten Teil 13 sowie einem dritten, ebenfalls geraden aber senkrechten Teil 18 besteht. Der Fallrohrbogen 12 erstreckt sich zunächst senkrecht nach unten von der Fallrohröffnung 3 weg und führt dann in einem Bogen entgegen der Förderrichtung der Förderschnecke 2. In dem in der Figur dargestellten Ausführungsbeispiel hat der Fallrohrbogen 12 einen konstanten Durchmesser, der etwa 2/3 des Schneckendurchmessers beträgt, also beispielsweise 115 mm im Falle einer Förderschnecke mit einem Förderschneckendurchmesser von 180 mm. Der Fallrohrbogen kann auch in Förderrichtung gekrümmt sein. Der Teil 13 ist dann zur Vertikalen spiegelbildlich geneigt.

Um mit der Streustoffaustragsvorrichtung sowohl trockenes Salz als auch Streusalz mit einer Restfeuchte von typischerweise bis zu 3% zuverlässig ausstreuen zu können, ist es in Abweichung zu dem dargestellten Ausführungsbeispiel sinnvoll, den Fallrohrbogen 12 zur Fallrohröffnung 3 konisch zu erweitern, so dass die Fallrohröffnung 3 einen Durchtrittsdurchmesser besitzt, der etwa 3/4 des Förderschneckendurchmessers beträgt, also beispielsweise 135 mm im Falle einer Förderschnecke mit einem Durchmesser von 180 mm. Dieser größere Durchmesser verhindert ein Verblocken der Fallrohröffnung 3 durch verklumptes restfeuchtes Streusalz.

Der Fallrohrbogen 12 dient im wesentlichen dazu, dem Streusalz den Drall zu entziehen, den es durch die Schneckenförderung erhalten hat. Ziel ist es, dass das Streusalz aus dem Fallrohrbogen 12 möglichst ohne jeglichen Drall auf das als Rutsche wirkende zweite Teilstück 13 des Fallrohrs 11 auftrifft, damit es von dort entlang einer gradförmigen Bahn weiter zu dem unter dem Fallrohr 11 angeordneten Streuteller 14 an einer vordefinierten Stelle auftrifft.

Um sicher zu stellen, dass das durch die Fallrohröffnung 3 hindurchtretende Streusalz tatsächlich zuerst auf den Fallrohrbogen 12 und von dort auf die Fallrohrrutsche 13 trifft, ist der Fallrohrbogen 12 so weit in das untere Teilstück des Fallrohrs hineingeführt, dass seine unterste Kante 15 in Förderrichtung der Förderschnecke 2 gesehen vor der Abrißkante 16 der Fallrohröffnung 3 liegt.

In dem dargestellten bevorzugten Ausführungsbeispiel führt der Fallrohrbogen 12 über einen Kreiswinkel von etwa 60° in das untere Teilstück 13 des Fallrohrs 11 hinein, welches eine Rutsche mit einem Neigungswinkel α von 70° zur Horizontalen besitzt. Dies ist lediglich ein bevorzugter Wert. Der Neigungswinkel α der Fallrohrrutsche 13 kann zwischen 60° und 80° liegen. Der Fallrohrdurchmesser beträgt wiederum vorzugsweise 3/4 des Förderschneckendurchmessers, also beispielsweise 135 mm im Falle einer Förderschnecke mit einem Durchmesser von 180 mm.

Das untere Ende 17 des zweiten Fallrohrteils 13 ragt in einen dritten Fallrohrteil 18 hinein, welcher hier senkrecht ausgerichtet ist. Dadurch erfährt das Streugut eine weitere Strömungsrichtungsänderung, bevor es auf den Streuteller 14 auftrifft. Das dritte Fallrohrteil kann auch geneigt oder gekrümmt sein. Es können gegebenenfalls auch noch weitere Umlenkstrecken auf dem Strömungsweg des Streuguts zum Streuteller vorgesehen werden. Mit jeder Umlenkung verliert die Strömung weiteren Drall.

## Patentansprüche

1. Streustoffaustragvorrichtung umfassend einen Streuteller (14), ein zum Streuteller (14) führendes Fallrohr (11), welches auch als Rutsche ausgebildet sein kann und sich mit einem ersten Teil (12) an eine Fallrohröffnung (3) anschließt, durch die hindurch Streustoff schwerkraftbedingt dem ersten Teil (12) zugeleitet wird, und ein Fördermittel (2), insbesondere eine Förderschnecke, zum Fördern von Streustoff von einem Streustoffreservoir zur Fallrohröffnung (3), wobei das untere Ende (15) des ersten Teils (12) in einen im allgemeinen geradlinigen zweiten Teil (13) führt, der als Fallrohr oder Rutsche ausgeführt ist und im Vergleich zum ersten Teil (12) einen anderen Neigungswinkel besitzt, um den von dem ersten Teil (12) zugeführten Streustoff umzuleiten, wobei der erste Teil (12) in einer zum Streuteller (14) senkrecht verlaufenden Ebene gekrümmt ist, **dadurch gekennzeichnet, daß** der zweite Teil (13) eine dem gekrümmten ersten Teil (12) entgegengesetzte Neigungsrichtung von 60° bis 80° zur Horizontalen besitzt.

2. Vorrichtung nach Anspruch 1, wobei der zweite Teil (13) mit seinem unteren Ende (17) in einen weiteren Teil (18) führt, der als Fallrohr oder Rutsche ausgeführt ist und im Vergleich zum zweiten Teil (13) einen anderen Neigungswinkel besitzt, um den vom zweiten Teil (13) zugeführten Streustoff nochmals umzuleiten.

3. Vorrichtung nach einem der Ansprüche 1 oder 2, wobei das erste und/oder das zweite Teil (12, 13) in das jeweilige nächstfolgende Teil (13 bzw. 18) hineinragt, wenn das jeweilige nächstfolgende Teil (13 bzw. 18) als Fallrohr ausgebildet ist.

4. Vorrichtung nach einem der Ansprüche 1 bis 3, wobei der Streustoff in dem ersten Teil (12) bei nicht verschwenktem Streuteller (14) entgegen der Förderrichtung des Fördermittels (2) geleitet und im zweiten Teil (13) wieder in Förderrichtung des Fördermittels (2) geleitet wird.

5. Vorrichtung nach einem der Ansprüche 1 bis 3, wobei der Streustoff in dem ersten Teil (12) bei nicht verschwenktem Streuteller (14) in Förderrichtung des Fördermittels (2) geleitet und im zweiten Teil (13) entgegen der Förderrichtung des Fördermittels (2) geleitet wird.

6. Vorrichtung nach einem der Ansprüche 1 bis 5, wobei der zweite Teil (13) um 70° Horizontalen geneigt ist.

7. Streustoffaustragvorrichtung nach einem der Ansprüche 1 bis 6, **dadurch gekennzeichnet, daβ** das Fördermittel (2) in einem Abstand vor der Öffnung (3) endet, wobei zwischen dem Ende des Fördermittels (2) und der Öffnung (3) ein angetriebenes bewegtes Mittel (8) zur Entklumpung des Streustoffs, insbesondere eine Rühreinrichtung, vorgesehen ist, und wobei der Streustoff von dem Entklumpungsmittel (8) in die Öffnung (3) und weiter durch das Fallrohr (11) hindurch bis zum Streuteller (14) ungehindert fließen kann.

8. Vorrichtung nach Anspruch 7, wobei das Entklumpungsmittel (8) um einen Abstand (a) vom Ende des Fördermittels (2) beabstandet ist und wobei dieser Abstand (a) bei einer Förderschnecke als Fördermittel etwa 1/3 oder mehr des Förderschneckendurchmessers beträgt.

9. Vorrichtung nach Anspruch 7 oder 8, wobei das Entklumpungsmittel (8) rotierende Elemente (9), insbesondere Stifte, umfaßt, die bei einer Förderschnecke als Fördermittel mit einer die Förderschnecke (2) antreibenden Antriebswelle (5) rotieren.

10. Vorrichtung nach Anspruch 9, wobei die Elemente (9) unterschiedliche Neigungswinkel zur Drehachse der Antriebswelle (5) besitzen.

11. Vorrichtung nach Anspruch 9 oder 10, wobei die Elemente (9) ein oder mehrere Elementreihen (8) bilden, die aus drei bis acht, vorzugsweise jeweils fünf, um den Umfang der Antriebswelle (5) verteilten Elementen (9) bestehen.

12. Vorrichtung nach Anspruch 11, wobei die Rühreinrichtung mehr als eine, vorzugsweise drei, zueinander in axialer Richtung entlang der Antriebswelle (5) voneinander beabstandete Elementreihen (8) umfaßt.

13. Vorrichtung nach Anspruch 12, wobei die Elemente (9) von zueinander benachbarten Elementreihen (8) auf Lücke zueinander stehen.

14. Vorrichtung nach einem der Ansprüche 11 bis 13, wobei zumindest die vom Ende des Fördermittels (2) am weitesten beabstandete Elementreihe (8) über der Öffnung (3) liegt

15. Vorrichtung nach einem der Ansprüche 7 bis 14, wobei der Bereich zwischen dem Ende des Fördermittels (2) und der Öffnung (3) als konkave Rinne ausgebildet ist.

16. Vorrichtung nach einem der Ansprüche 7 bis 15, wobei das Fördermittel (2) als eingängige Förderschnecke ausgeführt ist.

17. Vorrichtung nach einem der Ansprüche 7 bis 16, wobei eine Auskleidung (10) aus Polyurethan vorgesehen ist, mittels welchem über die Öffnung (3) hinausgeförderter Streustoff in die Öffnung (3) geleitet wird.

## Claims

1. Apparatus for spreading grit material, comprising a spreading disk (14), a down pipe (11) leading to the spreading disk (14), which down pipe can also be designed as a chute, and which with a first part (12) is connected to a down pipe opening (3), through which grit material is supplied to the first part (12) by gravitational force, and a conveying means (2), particularly a screw conveyor, for conveying grit material from a grit material reservoir to the down pipe opening (3), wherein the lower end (15) of the first part (12) leads into a in generally straight second part (13), which is embodied as a down pipe or a chute and has a different angle of inclination compared to the first part (12), in order to deflect the grit material supplied by the first part (12), wherein the first part (12) is curved in a plane oriented vertically to the spreading disk (14), **characterized in that** the second part (13) has an inclination direction of 60° up to 80° compared to the horizontal which is contrary to the curved first part (12).

2. Apparatus according to claim 1, wherein the second part (13) leads into a further part (18) with its lower end (17), which further part is embodied as a down pipe or a chute, and has a different inclination angle compared to the second part (13), in order to once more deflect the grit material supplied by the second part (13).

3. Apparatus according to one of claims 1 or 2, wherein the first and/or the second part (12, 13) extends into the respectively next following part (13 or 18), if the respectively next following part (13 or 18) is embodied as a down pipe.

4. Apparatus according to one of claims 1 to 3, wherein the grit material in the first part (12) is guided contrary to the conveying direction of the conveying means (2) and in the second part (13) is guided again in the conveying direction of the conveying means (2), with the spreading disk (14) not being swiveled.

5. Apparatus according to one of claims 1 to 3, wherein the grit material in the first part (12) is guided in the conveying direction of the conveying means (2) and in the second part (13) is guided contrary to the conveying direction of the conveying means (2), with the spreading disk (14) not being swiveled.

6. Apparatus according to one of claims 1 to 5, wherein the second part (13) is inclined at 70° compared to the horizontal.

7. Apparatus for spreading grit material according to one of claims 1 to 6, **characterized in that** the conveying means (2) ends at a distance from the opening (3), wherein between the end of the conveying means (2) and the opening (3) a driven moved means (8) for dispersing clumps of the grit material, in particular a stirring device, is provided, and wherein the grit material can flow unhindered from the means for dispersing clumps (8) into the opening (3) and further through the down pipe (11) to the spreading disk (14).

8. Apparatus according to claim 7, wherein the means for dispersing clumps (8) is spaced by a distance (a) from the end of the conveying means (2), and wherein this distance (a) in the case of a conveyor screw as conveying means amounts to about 1/3 or more of the diameter of the conveyor screw.

9. Apparatus according to claim 7 or 8, wherein the means for dispersing clumps (8) comprises rotating elements (9), in particular pins, which in the case of a screw conveyor as conveying means rotate along with a drive shaft (5) driving the screw conveyor (2).

10. Apparatus according to claim 9, wherein the elements (9) have different inclination angles in relation to the rotation axis of the drive shaft (5).

11. Apparatus according to claim 9 or 10, wherein the elements (9) form one or more element rows (8), each of which consisting of three to eight, preferably five elements (9) distributed around the circumference of the drive shaft (5).

12. Apparatus according to claim 11, wherein the stirring device comprises more than one, preferably three element rows (8) spaced apart from each other in an axial direction along the drive shaft (5).

13. Apparatus according to claim 12, wherein the elements (9) of element rows (8) adjacent to each other are staggered so as to fill gaps.

14. Apparatus according to one of claims 11 to 13, wherein at least the element row (8) spaced furthest apart from the end of the conveying means (2) lies above the opening (3).

15. Apparatus according to one of claims 7 to 14, wherein the area between the end of the conveying means (2) and the opening (3) is embodied as a concave chute.

16. Apparatus according to one of claims 7 to 15, wherein the conveying means (2) is embodied as a single-thread screw conveyor.

17. Apparatus according to one of claims 7 to 16, wherein a coating (10) made of polyurethane is provided, by means of which coating grit material conveyed beyond the opening (3) is conducted into the opening (3).

## Revendications

1. Distributeur pour matière répandable comprenant une sole distributrice (14), un tuyau de descente (11) conduisant à la sole distributrice (14), lequel peut également être un glissoir et se raccorde à une première partie (12) sur une ouverture du tuyau de descente (3) par laquelle de la matière répandable est acheminée par la force de gravité vers la première partie (12), et un moyen de transport (2), en particulier une vis sans fin pour transporter la matière répandable d'un réservoir de matière répandable à l'ouverture du tuyau de descente (3), l'extrémité inférieure (15) de la première partie (12) conduisant dans une deuxième partie (13) essentiellement rectiligne, réalisée comme tuyau de descente ou glissoire et qui possède un angle d'inclinaison différent par rapport à la première partie (12), pour détourner la matière répandable amenée par la première partie (12), la première partie (12) étant courbée dans un plan perpendiculaire à la sole distributrice (14),
**caractérisé en ce que** la deuxième partie (13) possède une direction d'inclinaison de 60° à 80° par rapport à l'horizontale opposée à la première partie (12) courbée.

2. Distributeur selon la revendication 1, dans lequel la deuxième partie (13) conduit avec son extrémité inférieure (17) dans une autre partie (18) réalisée comme tuyau de descente ou glissoir et possède un autre angle d'inclinaison par rapport à la deuxième partie (13) pour encore détourner la matière répandable amenée par la deuxième partie (13).

3. Distributeur selon la revendication 1 ou 2, dans lequel la première et/ou la deuxième partie (12, 13) fait saillie dans la partie suivante respective (13 respectivement 18) lorsque la partie suivante respective (13 respectivement 18) est un tuyau de descente.

4. Distributeur selon l'une des revendications 1 à 3, dans lequel la matière répandable dans la première partie (12) lorsque la sole distributrice (14) n'est pas basculée, est dirigée contre le sens de transport du moyen de transport (2) et dans la deuxième partie (13) est de nouveau dirigée dans le sens de transport du moyen de transport (2).

5. Distributeur selon l'une des revendications 1 à 3, dans lequel la matière répandable dans la première partie (12) lorsque la sole distributrice (14) n'est pas basculée, est dirigée dans le sens de transport du moyen de transport (2) et dans la deuxième partie (13) est dirigée contre le sens de transport du moyen de transport (2).

6. Distributeur selon l'une des revendications 1 à 5, dans lequel la deuxième partie (13) est inclinée à 70° sur l'horizontale.

7. Distributeur selon l'une des revendications 1 à 6,
**caractérisé en ce que** le moyen de transport (2) finit à distance de l'ouverture (3), moyennant quoi entre l'extrémité du moyen de transport (2) et de l'ouverture (3), un moyen mobile entraîné (8) est prévu pour désagglomérer la matière répandable, particulièrement un dispositif d'agitation, et la matière répandable pouvantt s'écouler librement depuis le moyen pour désagglomérer (8) dans l'ouverture (3) et ensuite à travers le tuyau de descente (11) jusqu'à la sole distributrice (14).

8. Distributeur selon la revendication 7, dans lequel le moyen pour désagglomérer (8) est écarté de l'extrémité du moyen de transport (2) d'une distance (a) et dans lequel cette distance (a), avec une vis sans fin comme moyen de transport, représente environ 1/3 ou plus du diamètre de la vis sans fin.

9. Distributeur selon la revendication 7 ou 8 dans lequel le moyen pour désagglomérer (8) comprend des moyens rotatifs (9), notamment des tiges qui, avec une vis sans fin comme moyen de transport, tournent avec un arbre d'entraînement (5) entraînant la vis sans fin (2).

10. Distributeur selon la revendication 9, dans lequel les éléments (9) présentent angles d'inclinaison différents par rapport à l'axe de rotation de l'arbre entraînement (5).

11. Distributeur selon la revendication 9 ou 10, dans lequel les éléments (9) forment une ou plusieurs rangée(s) d'éléments (8) qui se composent de trois à huit, de préférence respectivement cinq éléments (9) répartis sur le périmètre de l'arbre entraînement (5).

12. Distributeur selon la revendication 11, dans lequel le dispositif d'agitation présente plusieurs, de préférence trois rangées d'éléments (8) écartées l'une de l'autre dans le sens axial le long de l'arbre entraînement (5).

13. Distributeur selon la revendication 12, dans lequel les éléments (9) des rangées d'éléments (8) adjacentes les unes aux autres reposent les uns par rapport aux autres sur un interstice.

14. Distributeur selon l'une des revendications 11 à 13, dans lequel au moins la rangée d'éléments (8) la plus écartée de l'extrémité du moyen de transport (2) est placée au-dessus de l'ouverture (3).

15. Distributeur selon l'une des revendications 7 à 14, dans lequel la zone entre l'extrémité du moyen de transport (2) et l'ouverture (3) est formée comme une rainure concave.

16. Distributeur selon l'une des revendications 7 à 15, dans lequel le moyen de transport (2) est réalisé comme vis sans fin à pas simple.

17. Distributeur selon l'une des revendications 7 à 16, dans lequel un revêtement (10) en polyuréthane est prévu, au moyen duquel de la matière répandable acheminée au-dessus de l'ouverture (3) est dirigé dans l'ouverture (3).
